# FASCICULE DE BREVET EUROPEEN

(11) **EP 0 567 387 B1**
(45) Date de publication et mention de la délivrance du brevet: **10.07.1996**
(21) Numéro de dépôt: 93401015.8
(22) Date de dépôt: 20.04.1993
(51) Int. Cl.: B29C 43/10

(54) **Dispositif de compactage à chaud pour la fabrication de pièces nécessitant des montées en pression et en température simultanées**
Vorrichtung zum Warmverdichten für die Herstellung von Gegenständen unter gleichzeitigem Aufbau von Druck und Temperatur
Hot pressing apparatus for the production of articles under simultaneous rise of temperature and pressure

(30) Priorité: 22.04.1992 FR 9204946
(43) Date de publication de la demande: 27.10.1993
(73) Titulaire: AEROSPATIALE Société Nationale Industrielle, F-75781 Paris Cédex 16 (FR)
(72) Inventeur: Le Touche, Roger André Louis, F-78920 Ecquevilly (FR)
(74) Mandataire: Poulin, Gérard

(56) Documents cités:
- US-A- 4 954 209
- US-A- 4 983 345
- US-A- 5 009 687

## Description

L'invention concerne un dispositif de compactage à chaud, conçu pour être utilisé lors de la fabrication de pièces nécessitant des montées en pression et en température simultanées, telles que des pièces en matériau thermodurcissable ou thermoplastique.

L'invention s'applique avantageusement à la fabrication de pièces en matériau composite comprenant une matrice de résine organique classique (phénolique ou époxyde), une matrice de résine thermoplastique. Cependant, l'invention n'est pas limitée à cette application et couvre plus généralement la fabrication par moulage de toute pièce nécessitant simultanément une montée en pression et une montée en température.

Les pièces en matériau composite sont généralement fabriquées par moulage à partir d'une ébauche de pièce. Au cours du moulage, il est nécessaire d'appliquer sur l'ébauche une pression permettant sa mise en forme et de chauffer cette ébauche selon un cycle de température préétabli, afin de permettre le compactage et, dans certains cas, la polymérisation.

Le plus souvent, cette opération de moulage est réalisée en autoclave, ce qui permet de fabriquer des pièces de relativement grandes dimensions.

Pour fabriquer des pièces de plus petites dimensions, on effectue aussi parfois le moulage des pièces sous presse.

L'évolution des matériaux utilisés dans les matrices des matériaux composites, se traduit par la nécessité de plus en plus fréquente d'accroître la pression appliquée sur l'ébauche de pièce lors du moulage. Ainsi, certaines résines thermoplastiques doivent être compactées sous 50 bars de pression et la pression de compactage d'une matrice métallique peut être égale et même supérieure à 200 bars.

Dans ces conditions, l'utilisation d'un autoclave pour effectuer le moulage est pratiquement impossible à envisager pour des raisons de sécurité, notamment lors de la fabrication de pièces de grandes dimensions. En effet, un autoclave présentant par exemple un volume utile d'environ 1000 m³ représente lorsqu'il est pressurisé à 15 ou 20 bars un risque majeur pour l'environnement.

Par ailleurs, s'il est théoriquement possible d'effectuer un moulage sous presse sous de telles pressions, cette technique doit aussi être rapidement rejetée, lorsque les dimensions des pièces augmentent, en raison de l'encombrement et du coût considérables atteints par les éléments extérieurs à l'outillage de moulage et permettant d'appliquer la pression.

L'invention a précisément pour objet un dispositif de compactage à chaud dont la conception originale lui permet d'envisager la fabrication de pièces nécessitant des montées en pression et en température simultanées, quelles que soient les dimensions de ces pièces et pour des valeurs de pression pouvant atteindre et même dépasser 200 bars, sans poser de problèmes de sécurité particuliers et sans entraîner de surcoûts notables.

Conformément à l'invention, ce résultat est obtenu au moyen d'un dispositif de compactage à chaud, pour la fabrication de pièces nécessitant des montées en pression et en température simultanées, comprenant un moule chauffant apte à recevoir une ébauche de la pièce à fabriquer, et des moyens de compactage aptes à presser l'ébauche contre le moule chauffant, par l'intermédiaire d'une vessie de compactage, caractérisé par le fait que les moyens de compactage comprennent une zone anti-convection, apte à recevoir un produit à l'état vapeur, interposée entre la vessie de compactage et une paroi semi-étanche, étanche au produit à l'état liquide et perméable au produit à l'état vapeur, et une zone d'alimentation, apte à recevoir ledit produit à l'état liquide, située d'un côté de la paroi opposé à la zone anti-convection.

Dans un tel dispositif, la pression est appliquée sur l'ébauche par le produit à l'état de vapeur surchauffée qui se trouve dans la zone anti-convection. Le volume de vapeur sous pression reste donc très faible, même lorsque la pièce à réaliser est de très grandes dimensions. Par conséquent, il devient possible d'atteindre de très fortes pressions de compactage en éliminant tout risque industriel majeur.

La zone anti-convection est remplie d'un matériau poreux et réfractaire permettant d'éviter les échanges thermiques par convection. On obtient ainsi un gradient de température dans la couche de vapeur, qui permet de contrôler séparément la température appliquée sur la pièce (qui correspond à la température de compactage) et la pression appliquée sur la pièce (déterminée par la température à l'interface liquide-vapeur, c'est-à-dire à l'emplacement de la paroi semi-étanche).

La pression semi-étanche et la vessie de compactage sont sensiblement parallèles et définissent entre elles une zone anti-convection de faible épaisseur.

Dans le cas où la pièce à fabriquer a la forme d'un tube, la paroi semi-étanche, la vessie de compactage et la zone anti-convection sont disposées coaxialement à l'intérieur du moule.

Afin que l'épaisseur du produit à l'état liquide qui se trouve en contact avec la paroi semi-étanche soit aussi faible que possible, la zone d'alimentation est généralement délimitée à l'opposé de cette paroi par un contre-moule s'étendant sensiblement parallèlement à ladite paroi.

Lorsque le dispositif est appliqué à la fabrication d'un tube, le contre-moule est également disposé coaxialement à l'intérieur du moule.

Dans un premier mode de réalisation de l'invention, la pression appliquée sur la pièce peut être régulée par des moyens de régulation de température intégrés au contre-moule.

Dans un deuxième mode de réalisation de l'invention, éventuellement combiné avec le premier, la régulation de la pression appliquée sur la pièce est assurée par un circuit d'alimentation qui communique avec la zone d'alimentation. Ce circuit comprend des moyens pour faire circuler le produit à l'état liquide dans la zone d'alimentation, des moyens pour refroidir le produit en dessous de sa température de vaporisation et des moyens de mesure de pression agissant sur les moyens pour faire circuler le produit, afin de donner au produit à l'état vapeur contenu dans la zone anti-convection la pression désirée.

Afin d'éviter toute vaporisation du produit à l'extérieur de la zone d'alimentation, les moyens pour refroidir le produit comprennent des réfrigérants placés à l'entrée et à la sortie de cette zone.

Avantageusement, le circuit d'alimentation comprend de plus des vannes de fermeture placées à l'entrée et à la sortie de la zone d'alimentation et dont la fermeture permet d'assurer la montée en pression au début de l'opération de moulage.

En outre, le démoulage de la pièce lorsque l'opération de moulage proprement dite est terminée est facilité en prévoyant un circuit de mise en dépression de la zone anti-convection.

On décrira à présent, à titre d'exemples non limitatifs, différents modes de réalisation de l'invention, en se référant aux dessins annexés, dans lesquels :
- la figure 1 illustre de façon schématique un dispositif de compactage à chaud conforme à l'invention ;
- la figure 2 est une vue en coupe à plus grande échelle de l'ensemble de moulage utilisé dans le dispositif de la figure 1 ;
- la figure 3 illustre, dans le cas de l'eau, l'évolution de la pression absolue P (en bars) en fonction de la température T de vaporisation (en °C) ;
- la figure 4 est une vue en coupe transversale illustrant la fabrication d'une pièce cylindrique de grand diamètre à l'aide d'un dispositif conforme à l'invention ; et
- la figure 5 est une vue en coupe longitudinale illustrant l'application du dispositif selon l'invention à la fabrication d'un tube de petit diamètre.

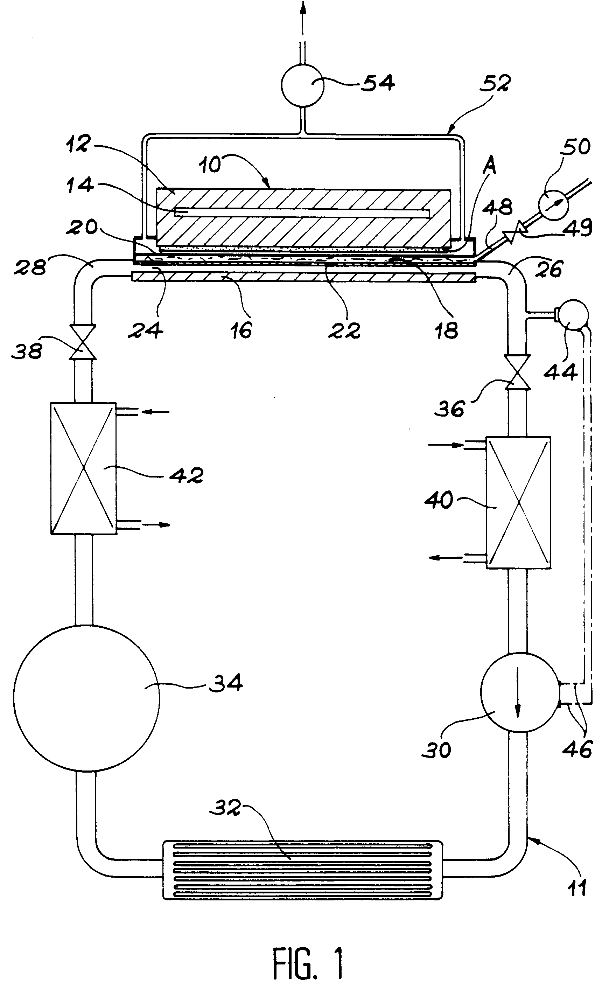

On décrira tout d'abord en se référant à la figure 1 un mode de réalisation préféré d'un dispositif de compactage à chaud conforme à l'invention. Ce dispositif se compose essentiellement d'un ensemble de moulage, désigné de façon générale par la référence 10, et d'un circuit d'alimentation extérieur 11, permettant d'introduire dans l'ensemble de moulage 10 un produit tel que de l'eau, dont le passage à l'état de vapeur surchauffée, à l'intérieur de l'ensemble 10, assure l'application de la pression nécessaire au moulage sur une ébauche de pièce A.

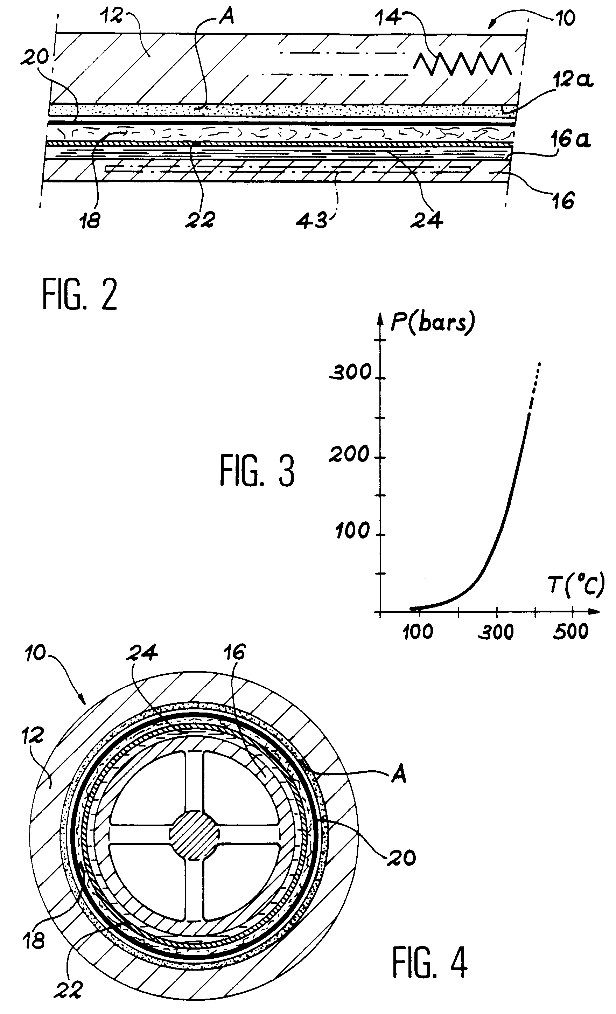

Les différents éléments constituant l'ensemble de moulage 10 vont à présent être décrits en se référant à la figure 2.

Cet ensemble de moulage 10 comprend un moule chauffant 12, dont la surface active 12a tournée vers le bas sur la figure 1 est complémentaire de la surface extérieure de la pièce à réaliser. Ce moule chauffant 12 est équipé de moyens de chauffage tels que des résistances électriques chauffantes 14 dont la température peut être régulée à volonté. Ce moule 12 présente des caractéristiques mécaniques lui permettant de résister à la pression de compactage. Si la tenue mécanique de la partie chauffante du moule est insuffisante pour résister à cette pression, une structure complémentaire assurant cette tenue mécanique peut être placée autour du moule 12 et séparée de ce dernier par un isolant thermique.

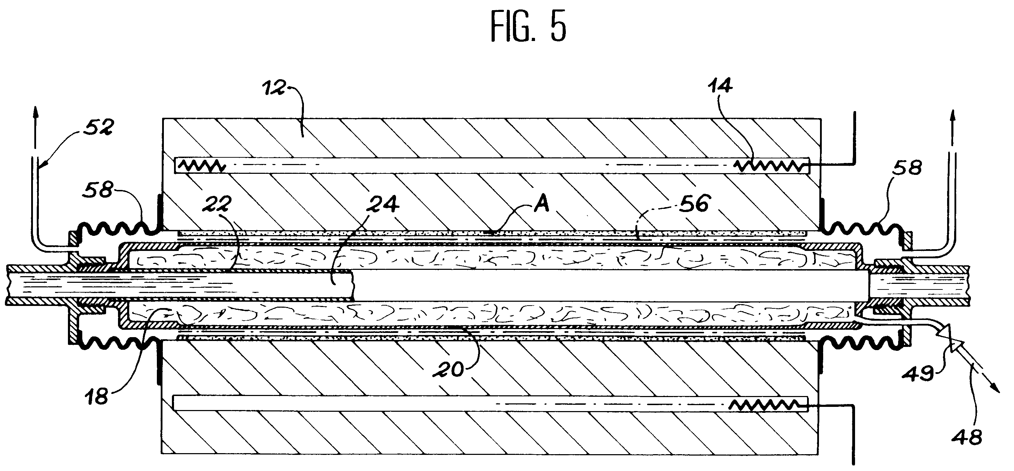

Dans la majorité des cas, à l'exception de celui qui sera décrit par la suite en se référant à la figure 5, l'ensemble de moulage 10 comprend également un contre-moule 16 dont la face active 16a, tournée vers le moule 12 est orientée parallèlement à la surface active 12a de ce dernier. Comme le moule 12, le contre-moule 16 est réalisé en un matériau résistant à la pression engendrée à l'intérieur de l'ensemble de moulage lors de la mise en oeuvre du dispositif.

L'espace ménagé entre le moule 12 et le contre-moule 16 présente une épaisseur constante qui n'excède que de très peu (par exemple, environ 12 mm) l'épaisseur présentée initialement par l'ébauche de pièce A. A l'intérieur de cet espace, l'ensemble de moulage 10 comprend essentiellement une zone anti-convection 18, ou zone de surchauffe de vapeur, interposée entre une vessie de compactage étanche 20, du côté du moule 12 et une paroi semi-étanche 22, du côté du contre-moule 16.

La zone anti-convection 18 est remplie d'un matériau poreux et réfractaire permettant d'éviter que des échanges thermiques par convection de gaz puissent se faire entre la vessie 20 et la paroi 22. A titre d'exemple nullement limitatif, ce matériau poreux et réfractaire peut être constitué par un mélange de fibres réfractaires et de silice pyrogénée.

La vessie de compactage 20 est reliée de façon étanche à la paroi 22, aux extrémités de la zone anti-convection 18 situées au-delà des parties actives du moule 12. Cette vessie 20 peut notamment être réalisée en acier inoxydable. Elle a pour fonction d'appliquer sur l'ébauche de pièce A la pression de compactage engendrée dans la zone 18, lorsque l'ébauche A est placée entre la vessie et le moule 12. Comme dans les dispositifs de moulage traditionnels, le moule 12 est agencé de façon à permettre la mise en place de l'ébauche A dans l'emplacement considéré, c'est-à-dire qu'il peut être réalisé au moins en deux parties lorsqu'il présente une forme fermée.

A titre d'exemple nullement limitatif, la zone anti-convection 18 peut présenter une épaisseur uniforme d'environ 10 mm.

La paroi semi-étanche 22 qui est placée sur la zone anti-convection 18 du côté du contre-moule 16 est réalisée en un matériau choisi de façon à être étanche au produit injecté dans l'ensemble de moulage 10 par le circuit d'alimentation 11, lorsque ce produit est à l'état liquide, tout en étant perméable à ce même produit lorsqu'il est à l'état vapeur. Ce produit est avantageusement constitué par de l'eau. Dans certains cas particuliers, on peut toutefois choisir d'autres liquides vaporisables, en particulier lorsque le refroidissement de la pièce moulée nécessite de descendre à une température inférieure à 0°C.

L'espace séparant la paroi semi-étanche 22 du contre-moule 16 forme une zone d'alimentation 24, avec laquelle communique le circuit d'alimentation 11. L'épaisseur, de préférence constante, de cette zone d'alimentation 11 peut être très faible, par exemple comprise entre 1 mm et 3 mm. Le circuit 11 permet d'introduire dans cette zone d'alimentation 24 le produit précité à l'état liquide.

Dans l'ensemble de moulage 10 illustré sur la figure 2, la surface active 12a du moule 12, la vessie de compactage 20, la paroi semi-étanche 22 et la surface active 16a du contre-moule 16 sont sensiblement parallèles entre elles.

Le circuit d'alimentation 11 est disposé géométriquement en dessous de l'ensemble de moulage 10 et il communique avec la zone d'alimentation 24 avec une ou plusieurs tuyauteries d'entrée 26 et une ou plusieurs tuyauteries de sortie 28. Ces tuyauteries peuvent également présenter des sections très faibles (par exemple, un diamètre intérieur de 1 ou 2 mm). Entre les tuyauteries d'entrée 26 et de sortie 28, le circuit d'alimentation 11 comprend une pompe haute pression 30, un radiateur 32 et un réservoir haute pression 34 contenant la quantité de produit à l'état liquide nécessaire afin d'appliquer sur l'ébauche de pièce A la pression désirée.

En outre, à proximité immédiate de l'ensemble de moulage 10, des vannes haute pression 36 et 38 et des réfrigérants 40 et 42 sont placés dans la tuyauterie de sortie 28 et dans la tuyauterie d'entrée 26, respectivement. Les vannes 36 et 38 sont mises en oeuvre au cours du moulage, d'une manière qui sera décrite par la suite. Les réfrigérants 40 et 42 permettent d'éviter que la température du produit dans le circuit d'alimentation 11 n'excède sa température de vaporisation, c'est-à-dire 100°C dans le cas de l'eau. Le radiateur 32 contribue, de façon facultative, à abaisser la température du produit en deçà de cette valeur.

Dans le mode de réalisation représenté sur la figure 1, un manomètre détendeur 44 est monté en dérivation dans la canalisation de sortie 28. Ce manomètre détendeur est relié électriquement par des câbles 46 au moteur électrique de commande de la pompe haute pression 30. Cet agencement permet, comme on l'expliquera par la suite, de réguler la pression appliquée sur l'ébauche de pièce A, lorsque cette pression a atteint la valeur désirée.

Dans un autre mode de réalisation illustré en traits mixtes sur la figure 2, cette régulation de pression est assurée par des moyens de régulation de température 43, montés dans le contre-moule 16 et assurant le maintien de ce dernier à une température constante, lorsque la pression désirée est atteinte.

Le dispositif de compactage à chaud illustré sur la figure 1 comprend également un circuit 48 de mise en dépression de la zone anti-convection 18, qui communique avec cette zone et comporte une vanne 49 et des moyens de pompage tels qu'une pompe à vide 50. Ce circuit de mise en dépression 48 est utilisé lors du refroidissement de la pièce après son moulage, afin d'accélérer ce refroidissement et de faciliter le démoulage.

Enfin, le dispositif comprend un circuit de dégazage 52 (figure 1) qui communique avec l'espace clos délimité entre la vessie 20 et le moule 12. Ce circuit, qui comporte des moyens de pompage tels qu'une pompe à vide 54, assure le dégazage de l'ébauche A lors du moulage.

Lors de la mise en oeuvre du dispositif de compactage à chaud illustrée sur la figure 1, l'ébauche de pièce A est mise en place par ouverture du moule 12, comme dans les dispositifs de moulage traditionnels. Dans l'exemple considéré, de l'eau à l'état liquide est alors introduite dans la zone d'alimentation 24, en fermant la vanne 36 et en actionnant la pompe 30. Les moyens de chauffage 14 du moule 12 sont alors mis en oeuvre, de même que le circuit de dégazage 52.

Lorsque l'on atteint la température de vaporisation de l'eau, c'est-à-dire 100°C, la vapeur d'eau formée dans la zone d'alimentation 24 pénètre dans la zone anti-convection 18 au travers de la paroi semi-étanche 22. Etant donné que le volume de la zone anti-convection est constant, l'augmentation de température à l'intérieur du moule se traduit par une augmentation de la pression de la couche de vapeur contenue dans cette zone. Dans le cas de l'eau, la figure 3 illustre l'évolution de la pression absolue (en bars) de la vapeur contenue dans la zone anti-convection 18, en fonction de la température de vaporisation (en °C), c'est-à-dire de la température à l'interface liquide-vapeur, qui se trouve localisée sur la paroi semi-étanche 22.

La pression ainsi engendrée dans la zone anti-convection 18 est appliquée sur l'ébauche de pièce A par l'intermédiaire de la vessie déformable 20. Elle est également transmise au produit à l'état liquide contenu dans l'espace d'alimentation 24 par la paroi semi-étanche 22.

Comme l'illustre la figure 3, la pression appliquée augmente d'autant plus rapidement que la température de la paroi semi-étanche 22 est élevée. En particulier, l'augmentation de la pression devient particulièrement rapide au-delà de 200°C.

Grâce au matériau poreux contenu dans la zone anti-convection 18 tout transfert de vapeur par convection entre la vessie 20 et la paroi 22 est évité, en empêchant les mouvements dynamiques de la vapeur. Un gradient de température s'établit donc dans cette couche de vapeur statique, entre la température atteinte par la vessie de compactage 20 chauffée par le moule 12 et la température de la paroi semi-étanche 22. Par conséquent, il est possible de piloter séparément la température de chauffage de la pièce, à l'aide des résistances chauffantes 14 intégrées au moule 12, et la pression appliquée sur la pièce, qui dépend comme on l'a vu, de la température de la paroi semi-étanche 22.

Lorsque la pression nécessaire au moulage de la pièce est atteinte, il convient soit de mettre en marche les moyens de régulation de pression du circuit d'alimentation 11, soit de mettre en marche les moyens de régulation de température 43 du contre-moule 16.

Dans le premier cas, on ouvre la vanne 36. Le manomètre détendeur 44 commande alors la pompe haute pression 30, dès que la pression dépasse un seuil prédéterminé. La pompe 30 injecte alors de l'eau relativement froide dans la zone d'alimentation 24, jusqu'à ce que la pression chute en dessous d'un deuxième seuil prédéterminé, ce qui a pour effet d'arrêter la pompe 30. On maintient ainsi la paroi semi-étanche à une température de vaporisation correspondant, sur la courbe de la figure 3, à la pression que l'on désire obtenir.

Dans le cas où la régulation de la pression appliquée sur l'ébauche de pièce A au cours du moulage est effectuée en régulant la température du contre-moule 16 grâce aux moyens de régulation 43, on maintient directement la température de la paroi semi-étanche 22 à une température de vaporisation correspondant à la pression désirée dans la zone anti-convection 18. Dans ce cas, les vannes 36 et 38 peuvent être maintenues fermées.

Lorsque le cycle de chauffage et d'application de pression désiré est terminé, on procède au refroidissement de la pièce avant son démoulage.

Dans un premier temps, ce refroidissement est assuré en laissant le moule 12 se refroidir par l'extérieur jusqu'à la température de rigidification de la matrice, lorsque celle-ci est une résine thermoplastique. Au cours de ce refroidissement, les vannes haute pression 36 et 38 sont fermées, de façon à conserver une pression de vapeur jusqu'à ce que le matériau compacté soit rigidifié.

Ensuite, on procède à un refroidissement interne de la pièce par chute de pression et mise sous vide de la zone anti-convection 18, en ouvrant la vanne 49 et en activant la pompe 50. Etant donné que la température d'ébullition de l'eau sous vide est inférieure à 20°C, ce refroidissement est très efficace. De plus, il permet d'utiliser les différences de contractions thermiques, pour faciliter le démoulage de la vessie et de la pièce réalisée.

Dans la pratique, la température et la pression atteintes lors du moulage dépendent des matériaux constituant l'ébauche de pièce à mouler et, plus précisément, du matériau constituant la matrice dans le cas d'une pièce en matériau composite.

Ainsi, la température est régulée au niveau nécessaire pour permettre le compactage et, dans certains cas, la polymérisation de l'ébauche de pièce. Cette température est d'environ 200°C pour les résines organiques classiques (phénoliques ou époxydes) et d'environ 300°C pour les résines thermoplastiques de type "PEEK". Par ailleurs, le point de ramolissement des matrices métalliques est d'environ 600°C pour l'aluminium et 900°C pour le titane.

A titre d'illustration, dans le cas d'un matériau devant être compacté à 600°C sous 200 bars de pression, l'équilibre liquide/vapeur s'établit à environ 360°C. Il convient alors de maintenir la paroi semi-étanche 22 à 360°C pour obtenir la pression de compactage désirée de 200 bars. Simultanément, le moule 12 est chauffé à 600°C.

Par ailleurs, dans le cas d'un matériau devant être compacté à 300°C sous 50 bars de pression, l'équilibre liquide/vapeur s'établit à 260°C. Il convient alors de maintenir la paroi semi-étanche 22 à 260°C pour obtenir la pression de compactage de 50 bars. Simultanément, le moule 12 est chauffé à 300°C.

Bien que le dispositif de compactage à chaud selon l'invention puisse être utilisé pour fabriquer des pièces de formes très variées, il est particulièrement adapté à la fabrication de pièces cylindriques ou tubulaires. C'est pourquoi on décrira successivement la forme prise par l'ensemble de moulage 10 lorsque la pièce à fabriquer est une pièce cylindrique de grand diamètre et lorsque la pièce à fabriquer est un tube de petit diamètre.

Comme l'illustre la figure 4, lorsque l'ensemble de moulage 10 est conçu pour fabriquer une pièce cylindrique de grand diamètre, les différents éléments qui le constituent sont agencés de façon concentrique autour d'un axe longitudinal. Ainsi, le moule 12 présente dans ce cas la forme d'un cylindre, avantageusement réalisé en deux parties, et dans lequel sont disposés de façon concentrique l'ébauche de pièce A, la vessie de compactage 20, la zone anti-convection 18, la paroi semi-étanche 22, la zone d'alimentation 24 et le contre-moule 16. Ce dernier se présente alors sous la forme d'un noyau ou mandrin de moulage.

Comme l'illustre la figure 5, lorsque l'ensemble de moulage 10 est conçu pour permettre la fabrication de tubes de petit diamètre, le moule 12 est ici encore un moule cylindrique dans lequel sont disposées coaxialement dans cet ordre l'ébauche de pièce A, la vessie de compactage 20, la zone anti-convection 18, la paroi semi-étanche 22 et la zone d'alimentation 24. Cette dernière est alors délimitée en totalité par la paroi semi-étanche 22, qui se présente dans ce cas sous la forme d'un tube de petit diamètre (par exemple, 1 mm à 3 mm). Etant donné qu'il n'y a pas de contre-moule, le contrôle de la pression de moulage s'effectue alors impérativement au moyen du circuit d'alimentation extérieur 11.

Comme on l'a également représenté sur la figure 5, il est possible dans ce cas, comme dans les précédents, de placer entre l'ébauche de pièce A et la vessie 20 une feuille de clinquant 56, par exemple en acier inoxydable, destinée à faciliter le démoulage de la pièce achevée.

On a aussi représenté sur la figure 5 des flexibles 58, interposés entre chaque extrémité du moule 12 et les tubulures d'entrée et de sortie du circuit d'alimentation 11. Ces flexibles, réalisés par exemple en acier inoxydable, assurent l'étanchéité de l'espace dans lequel est reçue l'ébauche de pièce A, tout en autorisant les dilatations différentielles.

Le dispositif de compactage à chaud conforme à l'invention permet de réaliser des pièces de dimensions quelconques, en limitant le volume compressible de vapeur d'eau surchauffée à la zone anti-convection 18, de faible épaisseur, délimitée entre la vessie 20 et la paroi semi-étanche 22, qui se trouve à l'intérieur de l'ensemble de moulage 10. Tous les circuits situés à l'extérieur de cet ensemble contiennent de l'eau à l'état liquide, donc incompressible, de telle sorte que le risque industriel est quasiment nul, même lorsque la pression de compactage est très élevée (jusqu'à environ 200 bars).

Par ailleurs, l'obtention d'une pression élevée est assurée sans qu'il soit nécessaire d'avoir recours à des systèmes encombrants et coûteux à l'extérieur de l'ensemble de moulage, puisque cette pression est engendrée à l'intérieur même de cet ensemble.

Bien entendu, l'invention n'est pas limitée aux modes de réalisation qui viennent d'être décrits à titre d'exemples, mais en couvre toutes les variantes. On notera en particulier que les formes et les dimensions des pièces qui peuvent être réalisées à l'aide du dispositif de compactage à chaud selon l'invention peuvent être quelconques. Par ailleurs, lorsque l'ensemble de moulage comprend un contre-moule équipé de moyens de refroidissement assurant la régulation de la température de la paroi semi-étanche et, par conséquent, de la pression de compactage, le circuit de remplissage peut être simplifié ou même supprimé.

## Revendications

1. Dispositif de compactage à chaud, pour la fabrication de pièces nécessitant des montées en pression et en température simultanées, comprenant un moule chauffant (12) apte à recevoir une ébauche de la pièce à fabriquer, et des moyens de compactage aptes à presser l'ébauche contre le moule chauffant, par l'intermédiaire d'une vessie de compactage (20), caractérisé par le fait que les moyens de compactage comprennent une zone anti-convection (18) apte à contenir un produit à l'état vapeur, interposée entre la vessie de compactage et une paroi semi-étanche (22), étanche au produit à l'état liquide et perméable au produit à l'état vapeur, et une zone d'alimentation (24), apte à recevoir ledit produit à l'état liquide, située d'un côté de la paroi (22) opposé à la zone anti-convection.

2. Dispositif selon la revendication 1, caractérisé par le fait que la zone anti-convection (18) est remplie d'un matériau poreux.

3. Dispositif selon l'une quelconque des revendications 1 et 2, caractérisé par le fait que la paroi semi-étanche (22) et la vessie de compactage (20) sont sensiblement parallèles.

4. Dispositif selon la revendication 3, caractérisé par le fait que, la pièce à fabriquer étant un tube, la paroi semi-étanche (22), la vessie de compactage (20) et la zone anti-convection (18) sont disposées coaxialement à l'intérieur du moule (12).

5. Dispositif selon l'une quelconque des revendications précédentes, caractérisé par le fait que la zone d'alimentation (24) est délimitée à l'opposé de la paroi semi-étanche (22) par un contre-moule (16) s'étendant sensiblement parallèlement à cette paroi.

6. Dispositif selon les revendications 4 et 5 combinées, caractérisé par le fait que le contre-moule (16) est également disposé coaxialement à l'intérieur du moule (12).

7. Dispositif selon l'une quelconque des revendications 5 et 6, caractérisé par le fait que des moyens de régulation de température (43) sont montés dans le contre-moule (16).

8. Dispositif selon l'une quelconque des revendications précédentes, caractérisé par le fait qu'il comprend un circuit d'alimentation (11) communiquant avec ladite zone d'alimentation (24) et comportant des moyens (30) pour faire circuler le produit à l'état liquide dans la zone d'alimentation, des moyens (32,40, 42) pour refroidir le produit en dessous de sa température de vaporisation et des moyens de mesure de pression (44) agissant sur les moyens (30) pour faire circuler le produit, afin de donner au produit à l'état vapeur contenu dans la zone anti-convection (18) une pression donnée.

9. Dispositif selon la revendication 8, caractérisé par le fait que les moyens pour refroidir le produit comprennent des réfrigérants (40,42) placés à l'entrée et à la sortie de la zone d'alimentation (24).

10. Dispositif selon l'une quelconque des revendications 8 et 9, caractérisé par le fait que le circuit d'alimentation (11) comprend de plus des vannes de fermeture (36,38) placées à l'entrée et à la sortie de la zone d'alimentation (24).

11. Dispositif selon l'une quelconque des revendications précédentes, caractérisé par le fait qu'il comprend de plus un circuit de mise en dépression (48) de la zone anti-convection (18).

## Claims

1. Hot compacting device for the production of parts requiring simultaneous pressure and temperature rises, comprising a heating mould (12) able to receive a blank of the part to be produced, and compacting means able to press the blank against the heating mould, by means of a compacting bag (20), characterized in that the compacting means comprise an anti-convection zone (18) able to contain a product in the vaporous state, interposed between the compacting bag and a semi-tight wall (22) tight to the product in the liquid state and permeable to the product in the vaporous state, and a supply zone (24) able to receive said product in the liquid state located on a side of the wall (22) opposite to said anti-convection zone.

2. Device according to claim 1, characterized in that the anti-convection zone (18) is filled with a porous material.

3. Device according to either of the claims 1 and 2, characterized in that the semi-tight wall (22) and the compacting bag (20) are substantially parallel.

4. Device according to claim 3, characterized in that, as the part to be produced is a tube, the semi-tight wall (22), the compacting bag (20) and the anti-convection zone (18) are arranged coaxially in the interior of the mould (12).

5. Device according to any one of the preceding claims, characterized in that the supply zone (24) is defined opposite the semi-tight wall (22) by a countermould (16) extending substantially parallel to said wall.

6. Device according to the claims 4 and 5 combined, characterized in that the countermould (16) is also positioned coaxially within the mould (12).

7. Device according to either of the claims 5 and 6, characterized in that the temperature regulating means (43) are installed in the countermould (16).

8. Device according to any one of the preceding claims, characterized in that it comprises a supply circuit (11) linked with the supply zone (24) and having means (30) for bringing about a circulation of the product in the liquid state in the supply zone, means (32, 40, 42) for cooling the product below its vaporization temperature and pressure measuring means (44) acting on the means (30) for circulating the product, in order to give the product in the vapour state contained in the anti-convection zone (18) a given pressure.

9. Device according to claim 8, characterized in that the means for cooling the product comprise condensers (40, 42) located at the inlet and outlet of the supply zone (24).

10. Device according to either of the claims 8 and 9, characterized in that the supply circuit (11) also comprises closing valves (36, 38) placed at the inlet and outlet of the supply zone (24).

11. Device according to any one of the preceding claims, characterized in that it also comprises a circuit (48) for vacuumizing the anti-convection zone (18).

## Patentansprüche

1. Vorrichtung zum Heißverdichten für die Herstellung von Teilen, welche eine gleichzeitige Druck- und Temperaturerhöhung erfordern, umfassend eine beheizbare Form (12), die ein Rohteil des herzustellenden Teils aufnehmen kann, und Verdichtungsmittel, die das Rohteil über eine Verdichtungsblase (20) an die beheizte Form pressen können, **dadurch gekennzeichnet, daß** die Verdichtungsmittel eine konvektionsverhindernde Zone (18), die ein Produkt im dampfförmigen Zustand enthalten kann und zwischen der Verdichtungsblase und einer halbdurchlässigen Wand (22) eingebaut ist, die für das Produkt im flüssigen Zustand undurchlässig und für das Produkt im dampfförmigen Zustand durchlässig ist, und eine Zufuhrzone (24), die das Produkt im flüssigen Zustand aufnehmen kann und sich auf der der konvektionsverhindernden Zone gegenüberliegenden Seite der Wand (22) befindet, umfassen.

2. Vorrichtung nach Anspruch 1, **dadurch gekennzeichnet, daß** die konvektionsverhindernde Zone (18) mit einem porösen Material gefüllt ist.

3. Vorrichtung nach Anspruch 1 oder 2, **dadurch gekennzeichnet, daß** die halbdurchlässige Wand (22) und die Verdichtungsblase (20) im wesentlichen parallel verlaufen.

4. Vorrichtung nach Anspruch 3, **dadurch gekennzeichnet, daß** das herzustellende Teil ein Rohr ist und die halbdurchlässige Wand (22), die Verdichtungsblase (20) und die konvektionsverhindernde Zone (18) im Inneren der Form (12) koaxial angeordnet sind.

5. Vorrichtung nach einem der vorhergehenden Ansprüche, **dadurch gekennzeichnet, daß** die Zufuhrzone (24) auf der der halbdurchlässigen Wand (22) gegenüberliegenden Seite von einer Gegenform (16) begrenzt wird, die zu jener Wand im wesentlichen parallel verläuft.

6. Vorrichtung nach den beiden Ansprüchen 4 und 5, **dadurch gekennzeichnet, daß** die Gegenform (16) ebenfalls koaxial im Inneren der Form (12) angeordnet ist.

7. Vorrichtung nach Anspruch 5 oder 6, **dadurch gekennzeichnet, daß** in der Gegenform (16) Mittel (43) zur Temperaturregelung angebracht sind.

8. Vorrichtung nach einem der vorhergehenden Ansprüche, **dadurch gekennzeichnet, daß** sie einen Versorgungskreislauf (11) umfaßt, der mit der Zufuhrzone (24) in Verbindung steht und Mittel (30), die das Produkt im flüssigen Zustand in der Zufuhrzone zirkulieren lassen, Mittel (32, 40, 42) zum Abkühlen des Produkts auf unter seine Verdampfungstemperatur und Meßmittel (44) für den Druck enthält, welche auf die Mittel (30), die das Produkt zirkulieren lassen, einwirken, um dem in der konvektionsverhindernden Zone (18) enthaltenen Produkt im dampfförmigen Zustand einen vorgegebenen Druck zu verleihen.

9. Vorrichtung nach Anspruch 8, **dadurch gekennzeichnet, daß** die Mittel zum Abkühlen des Produkts Kühler (40, 42) umfassen, die am Eingang und am Ausgang der Zufuhrzone (24) angebracht sind.

10. Vorrichtung nach Anspruch 8 oder 9, **dadurch gekennzeichnet, daß** der Versorgungskreislauf (11) außerdem Schließventile (36, 38) enthält, die am Eingang und am Ausgang der Zufuhrzone (24) angebracht sind.

11. Vorrichtung nach einem der vorhergehenden Ansprüche**, dadurch gekennzeichnet, daß** sie zusätzlich eine Leitung (48) für das Unter-Unterdruck-Setzen der konvektionsverhindernden Zone (18) umfaßt.
